# FASCICULE DE BREVET EUROPEEN

(11) **EP 2 855 762 B1**
(45) Date de publication et mention de la délivrance du brevet: **06.07.2016**
(21) Numéro de dépôt: 13730012.5
(22) Date de dépôt: 30.05.2013
(51) Int. Cl.: D06N 7/00

(54) **TOILE DE VERRE AUTOADHESIVE ET ACTIVABLE PAR L'EAU**
SELBSTKLEBENDES WASSERAKTIVIERBARES GLASGEWEBE
SELF-ADHESIVE WATER-ACTIVATABLE GLASS WEB

(30) Priorité: 04.06.2012 FR 1255158
(43) Date de publication de la demande: 08.04.2015
(73) Titulaire: Saint-Gobain Adfors, 73000 Chambéry (FR)
(72) Inventeur: CHUDA, Katarzyna, F-92600 Asnieres Sur Seine (FR); NIKAJ, Erisela, F-75018 Paris (FR); MIKULECHY, Bohuslav, 562 06 Ústí nad Orlicí (CZ); SUCHY, Filip, 592 31 Nové Mesto na Morave (CZ)
(74) Mandataire: Pöpping, Barbara
(86) Numéro de dépôt international: PCT/FR2013/051215
(87) Numéro de publication internationale: WO 2013/182783

(56) Documents cités:
- EP-A1- 0 445 461
- EP-A1- 1 035 187
- EP-A1- 1 707 667
- EP-A2- 1 162 306
- DE-U1- 8 124 330
- DE-U1- 29 718 222

## Description

La présente invention concerne un revêtement mural autoadhésif repositionnable, à base de fibres de verre, dont l'adhésion définitive au mur peut être obtenue, après la pose, par application d'eau ou d'une composition de peinture à base d'eau.

Les revêtements muraux à base de fibres de verre sont connus depuis de très nombreuses années. Ils sont faciles à appliquer et relativement bon marché, peuvent être peints avec des peintures à base d'eau, sont lessivables après peinture, et résistent mieux que les papiers peints à la déchirure, au feu et à l'humidité. La pose d'un revêtement mural classique à base de fibres de verre comprend typiquement les étapes successives suivantes :
- Encollage du mur et/ou du revêtement mural (env. 5 heures)
- Application du revêtement mural sur le mur (env. 5 heures),
- Séchage de la colle (env. 24 heures),
- Application d'une première couche de peinture (env. 4 heures),
- Séchage de la première couche de peinture (env. 24 heures),
- Application d'une deuxième couche de peinture (env. 4 heures), et
- Séchage de la deuxième couche de peinture (env. 24 heures),
les indications de durée étant celles estimées pour une pièce de 15 m² avec 35 m² de murs.

La présente invention a pour but de faciliter et raccourcir sensiblement la phase de collage (étapes 1 - 3). Elle propose un revêtement mural à base de fibres de verre préencollé avec un système adhésif particulier.

Différents revêtements muraux préencollés à base de fibres de verre ont déjà été décrits et mis sur le marché. Ainsi, la Demanderesse commercialise, sous la dénomination EasyGlue^{®}, une toile de verre préencollée par une colle classique à base d'amidon. L'utilisateur doit activer la colle en l'humidifiant avant la pose du revêtement mural. L'étape d'encollage est ainsi remplacée par l'étape d'humidification, légèrement plus rapide. L'étape d'application au mur ne se trouve toutefois pas sensiblement facilitée.

Par ailleurs, on a proposé plus récemment, sous la dénomination commerciale EasyFix^{®}, une toile de verre autoadhésive. Il s'agit d'un textile de verre à structure ouverte qui comporte, sur une de ses faces, un revêtement auto-adhésif repositionnable, également appelé adhésif sensible à la pression (PSA, de l'anglais *pressure sensitive adhesive*). Cet adhésif permet une application aisée du textile de verre au mur sans encollage ni humidification préalable. La fixation définitive se fait ensuite au moment de l'application de la peinture. Celle-ci pénètre en effet *via* les ouvertures du textile de verre et, après séchage, le colle fermement au mur. L'utilisateur économise ainsi l'étape d'encollage et l'étape de séchage de la colle.

Ce système présente toutefois comme principaux inconvénients le fait qu'un tel textile à structure ouverte est, pour des raisons esthétiques, inapproprié en tant que revêtement de plafond, et le fait que ce mécanisme d'adhésion par la peinture rend le revêtement mural très difficile à décoller.

Il existe par ailleurs un certain nombre de documents qui divulguent, d'un côté, des papiers peints autocollants (voir par exemple WO95/17312, WO93/06301, US 5 441 784, US 5 412 829, EP1707667 et WO00/31201), et, de l'autre côté, des papiers peints préencollés activables à l'eau (voir par exemple WO2004/003286, US4714723, EP1162306). A la connaissance de la Demanderesse, il n'existe pas de description de papiers peints à la fois autocollants et activables à l'eau.

Il n'existe ainsi pas de système totalement satisfaisant permettant de poser facilement et rapidement au mur un revêtement textile à base de fibres de verre, et de le coller définitivement sans encollage du mur ou du revêtement, tout en conservant une certaine facilité de décollage après humidification du revêtement mural.

La présente invention est basée sur l'idée d'essayer de combiner sur un même revêtement mural à la fois la fonction autoadhésive/repositionnable (EasyFix^{®}) et la fonction de collage définitive par humidification (activation) d'un adhésif latent (EasyGlue^{®}).

Cette combinaison semble *a priori* impossible. En effet, il est bien connu que les PSA ne fonctionnent généralement que sur des supports secs et que la présence d'eau au niveau de l'interface est incompatible avec une autoadhésivité de type PSA.

L'idée qui a permis de surmonter ce préjugé technique défavorable est d'activer l'adhésif latent seulement après positionnement correct du revêtement mural au mur/plafond. La fonction PSA est alors affaiblie voire inactivée par l'eau, mais aussitôt relayée par la fonction d'adhésivité classique de l'adhésif latent, activé par l'eau. Cette activation de l'adhésif latent pourrait, certes, se faire par simple application d'eau après la pose, mais il serait encore plus intéressant d'apporter cette eau d'activation sous forme d'une composition de peinture aqueuse. On combinerait ainsi deux étapes (activation + peinture) en une seule.

On se trouve alors de nouveau confronté à deux souhaits apparemment incompatibles : vouloir utiliser l'eau d'une composition de peinture pour l'activation d'une interface adhésive tout en empêchant ladite composition de peinture de pénétrer à travers le textile de verre vers cette interface.

La solution à ce problème réside dans le choix d'un textile de verre à structure fermée qui, contrairement à celui utilisé pour le produit EasyFix®, est imperméable à la peinture et qui, à la manière d'un filtre, ne laisse passer que la phase aqueuse de cette peinture.

La présente invention a par conséquent pour objet un revêtement mural autoadhésif comprenant
(A) un textile de verre à structure fermée, constitué de fibres de verres et d'un liant polymère perméable à l'eau, et
(B) un revêtement adhésif comprenant à la fois un adhésif sensible à la pression (PSA) et un adhésif latent activable par l'eau.

La présente invention a également pour objet un procédé de pose d'un tel revêtement mural autoadhésif.

On entend par revêtement mural un produit plat sous forme de bande d'une largeur généralement comprise entre quelques dizaines de centimètres et environ un mètre, stocké et commercialisé sous forme de rouleau. Ce revêtement est destiné à être collé sur les murs d'une pièce ou d'un bâtiment ou bien sur d'autres surfaces telles que le plafond, à l'exclusion des sols.

Dans la présente invention, on entend par « textile de verre à structure fermée », un textile, tissé ou non tissé, ayant une perméabilité au passage de l'air, mesurée selon la norme ISO 9237, à 200 Pa au plus égale à 50 L/(m².s).

Un tel textile de verre ne comporte pas d'ouvertures visibles à l'oeil nu et présente par conséquent un aspect fermé, uniforme, plus ou moins structuré.

Un tel textile peut être une toile de verre (structure tissée) ou un voile de verre (structure non tissée ou intissée). Il s'agit de préférence d'une toile de verre. Sa cohésion est assurée de manière connue par un liant polymère. Ce liant polymère doit être à la fois insoluble dans l'eau, mais suffisamment hydrophile pour laisser passer l'eau nécessaire à l'activation de l'adhésif latent appliqué sur une face du textile de verre.

De tels liants polymères perméables à l'eau sont connus dans la technique et sont généralement à base d'amidons hydrolysés, de résines acryliques hydrophiles, notamment des résines styréniques/acryliques anioniques, et/ou de caoutchouc styrène-butadiène (SBR).

Des textiles de verre utilisables pour la présente invention sont disponibles sur le marché et sont commercialisés par la Demanderesse par exemple sous la dénomination Novelio^{®}.

Leur poids surfacique (grammage) est avantageusement compris entre 80 et 450 g/m², de préférence entre 100 et 300 g/m² et en particulier entre 150 et 250 g/m².

Le revêtement adhésif est appliqué sur une seule face du textile de verre. Il peut avoir une structure de type monocouche, c'est-à-dire la composition adhésive ayant servi à sa formation peut renfermer à la fois l'adhésif sensible à la pression (PSA) et l'adhésif latent activable par l'eau. Dans ce mode de réalisation l'adhésif latent activable par l'eau est alors présent dans le revêtement adhésif (B) à raison de 5 à 150 g/m², de préférence de 50 à 120 g/m², en particulier de 80 à 100 g/m², et le PSA à raison de 5 et 80 g/m², de préférence de 10 à 50 g/m², en particulier de 25 à 40 g/m².

Dans un mode de réalisation préféré, le revêtement adhésif a une structure bi-couches ou multi-couches dans laquelle le PSA et l'adhésif latent activable par l'eau sont présents sous forme de deux couches adhésives distinctes, appliquées séparément à partir de deux compositions adhésives différentes.

Chacune de ces couches peut, indépendamment de l'autre, être continue ou discontinue, le terme « discontinu » englobant à la fois les couches constituées d'une pluralité d'éléments distincts et les couches comportant une pluralité d'ouvertures réparties plus ou moins régulièrement sur toute la surface de la couche.

Dans ce mode de réalisation où le revêtement adhésif a une structure à deux couches, la couche contenant l'adhésif latent activable à l'eau est de préférence celle déposée directement sur le textile de verre, et la couche contenant le composant PSA est déposée, dans un deuxième temps, sur la couche d'adhésif latent.

Dans un mode de réalisation préféré de l'invention, le revêtement adhésif (B) comprend par conséquent
(B1) une première couche adhésive, continue ou discontinue, formée par l'adhésif latent activable par l'eau, ladite première couche étant déposée directement sur le textile de verre, et
(B2) une deuxième couche, continue ou discontinue, formée par un PSA, ladite deuxième couche étant déposée sur la première couche (B1) et/ou à côté de celle-ci.

Lorsque la première couche (B1) est une couche discontinue, la deuxième couche (B2) peut bien entendu s'étendre au-delà de la première couche et être en contact directement avec le textile de verre dans les zones entre les éléments discrets ou dans les zones correspondant aux ouvertures de la première couche. On peut citer à titre d'exemple un motif où la première couche est formée par un premier ensemble de lignes droites, parallèles les unes aux autres, et la deuxième couche est formée par un autre ensemble de lignes droites, parallèles les unes aux autres, mais perpendiculaires aux premières.

On pourrait également envisager le dépôt de deux couches discontinues déposées l'une à côté de l'autre par exemple à la manière des cases d'un échiquier.

Dans un mode de réalisation particulièrement intéressant de la présente invention, la première couche adhésive (B1), c'est-à-dire celle formée par l'adhésif latent activable par l'eau, est une couche continue déposée sur la totalité d'une face du textile de verre (A). Cette continuité de l'adhésif activable par l'eau assure en effet une adhésion définitive, satisfaisante et régulière, sans formation de cloques ou de zones de moindre adhérence.

Sur cette première couche continue, on pose ensuite avantageusement une deuxième couche adhésive (B2) discontinue constituée d'éléments distincts. Le rapport de l'aire de la surface B2 à l'aire de la surface B1 est de préférence inférieur à 0,5, en particulier inférieur à 0,3 et idéalement inférieur à 0,1. Ce mode de réalisation peut être intéressant par exemple lorsque la présence du PSA risque d'affaiblir l'adhérence de l'adhésif activable par l'eau de la première couche.

Pour une pose facile du revêtement, celui-ci doit avoir une pégosité (*tack*) initiale suffisante pour adhérer par simple contact/pression sur un mur propre et sec et pour ne pas se décoller sous l'effet de son propre poids. De manière connue, cette pégosité ne doit toutefois pas excéder une certaine valeur pour que le revêtement mural reste facilement pelable et repositionnable tant qu'il n'a pas été humidifié.

Le revêtement adhésif (B), qu'il soit sous forme mono-couche ou multicouche, présente avantageusement une force d'adhésion initiale comprise entre 0,2 et 2 N. Cette force d'adhésion est mesurée de la manière décrite dans les exemples ci-après.

La pégosité est exclusivement due à l'adhésif sensible à la pression et l'ajustement de cette force d'adhésion fait partie des connaissances générales de l'homme du métier qui saura choisir la nature et les concentrations des différents ingrédients de l'adhésif sensible à la pression (tels que les polymères, l'agent tackifiant, charges etc.) ou encore la géométrie ou l'épaisseur de la couche de PSA.

Les adhésifs sensibles à la pression utilisables dans la présente invention sont connus. Ils peuvent être déposés sous forme d'une composition liquide à base de solvant organique ou d'eau (latex) ou bien ils peuvent être des polymères thermofusibles, c'est-à-dire des polymères de faible masse moléculaire qui, à l'état fondu, ont une viscosité suffisamment basse pour s'étaler de manière approprié.

Les PSA sont généralement à base d'une résine élastomère qui peut contenir un agent augmentant la pégosité (agent tackifiant).

La résine polymère est classiquement choisie parmi les résines acryliques, le caoutchouc butyle, les copolymères d'éthylène/acétate de vinyle (EVA), le caoutchouc naturel, les éthers vinyliques, et les copolymères séquencés à base de styrène tels que les copolymères styrène-butadiène-styrène (SBS), styrène-éthylène/butylène-styrène (SEBS), styrène-éthylène/propylène (SEP), styrène-isoprène-styrène (SIS).

L'EVA et les copolymères séquencés à base de styrène présentent l'avantage d'être des élastomères thermofusibles et peuvent donc être appliqués sous forme de composition exempte de solvant.

La deuxième couche adhésive, c'est-à-dire celle formée par le PSA, présente avantageusement un poids surfacique à sec compris entre 1 et 80 g/m², de préférence entre 2 et 50 g/m², et en particulier entre 4 et 40 g/m².

Cette deuxième couche adhésive, sensible à la pression, est déposée sur et/ou à côté d'une première couche formée par l'adhésif latent activable par l'eau. Cet adhésif latent, lorsqu'il est à l'état sec, est totalement inactif, c'est-à-dire dépourvu de caractère collant.

On peut utiliser en principe n'importe quel adhésif utilisé classiquement pour le collage de papiers peints et autres revêtements muraux, comme par exemple les adhésifs à base d'amidons, en particulier d'amidons de pomme de terre, de maïs ou de blé, d'amidons modifiés par hydrolyse ou cuisson, de dextrines, de cyclodextrines, de mono- et oligosaccharides, d'alkyléthers de cellulose et d'hydroxyalkyléthers de cellulose, de polyéthylèneglycol, de polyuréthannes hydrophiles, de polyacrylamides, de colles vinyliques aqueuses telles que les homopolymères de poly(acétate de vinyle) (PVAC) de préférence plastifié, de poly(acétate de vinyle) partiellement hydrolysé, de poly(alcool vinylique), de polyvinylpyrrolidone, de copolymères de vinylpyrrolidone et d'acétate de vinyle, de copolymères d'anhydride maléique et de méthylvinyléther ou de copolymères d'acétate de vinyle et de maléates ou d'acrylates. Bien entendu, l'adhésif latent activable à l'eau peut être un mélange de ces polymères naturels et synthétiques, pour autant que le mélange soit non collant à l'état sec et devienne un fluide visqueux et poisseux seulement après mise en contact avec de l'eau.

Un tel adhésif latent activable à l'eau peut contenir, de manière connue, des sels destinés à accroître son affinité pour l'eau.

L'ajout de tels sels diminue toutefois la tenue à l'eau de la couche adhésive et doit donc être limité le plus possible.

On peut citer à titre d'exemples de produits commerciaux utilisables en tant qu'adhésif latent activable par l'eau le produit Craymul^{®} 4366, à base de poly(acétate de vinyle) homopolymère et de dextrine, commercialisé par la société Arkema, ou le produit Luvitec^{®} VA64W de BASF.

Cet adhésif est utilisé en des quantités usuelles, généralement comprises entre 5 et 150 g/m², de préférence entre 50 et 120 g/m², en particulier entre 80 et 100 g/m², ces indications correspondant au poids surfacique à l'état sec.

Le revêtement mural de la présente invention permet la mise en oeuvre d'un procédé extrêmement simple et rapide rendu possible grâce à la double fonctionnalité de la couche adhésive contenant à la fois un adhésif sensible à la pression et un adhésif latent activable à l'eau.

Le procédé de pose du revêtement mural comprend les étapes successives suivantes :
- application d'une bande dudit revêtement mural sur un support de manière à ce que le revêtement adhésif soit en contact avec ledit support,
- si nécessaire, repositionnement de ladite bande de revêtement mural,
- application d'eau ou d'une composition aqueuse sur le revêtement mural.

Le support, de préférence une paroi ou un plafond, doit être propre et sec pour garantir une bonne adhésivité initiale du revêtement. Lorsque la bande de revêtement est correctement placée, on peut appliquer une pression, par exemple à l'aide d'un couteau à maroufler ou d'un rouleau afin de le faire adhérer au support avant l'étape d'activation par l'eau.

L'activation de l'adhésif latent se fait par application d'eau sur toute la surface du revêtement mural. Cette application d'eau peut se faire par tout moyen approprié, par exemple par pulvérisation ou à l'aide d'un rouleau.

Dans un mode de réalisation particulièrement avantageux, on applique sur le revêtement mural mis en contact avec le support et éventuellement marouflé, au moins une couche de peinture à base d'eau, de préférence au moyen d'un rouleau de peinture.

Il peut être nécessaire de diluer préalablement la composition de peinture avec de l'eau, typiquement entre 10 et 30 % d'eau.

### Exemples

### Revêtement adhésif comportant deux couches d'adhésif séparées

On applique sur une toile de verre fermée Novelio^{®} présentant un poids surfacique de 180 g/m² et une perméabilité au passage de l'air de 10 L/(m².s), une couche continue d'un adhésif latent activable à l'eau à base d'homopolymère d'acétate de vinyle et de dextrine commercialisé par la société Arkema sous la dénomination Craymul^{®} 4366. Cette couche est appliquée à raison de 80 - 90 g/m². Après séchage complet de cette première couche dans une étuve à 70 °C, on applique, sur cette couche, une deuxième couche continue d'un adhésif sensible à la pression à base de résine acrylique (Craymul^{®} 4508) commercialisé par la société Arkema. Le grammage de cette couche après séchage est d'environ 30 g/m².

La double couche adhésive obtenue de cette manière présente une adhésivité initiale d'environ 0,47 N, suffisante pour fixer le revêtement mural au mur par une simple pression de la main. Il est repositionnable plusieurs fois. Après application d'une couche de peinture acrylique à base d'eau (SilverPro AS-60) et séchage, on obtient une fixation définitive satisfaisante.

Tous les revêtements ont reçu deux couches de peinture acrylique.

Le tableau ci-dessous montre les différentes valeurs d'adhésivité (adhésivité initiale, adhésivité après un et deux repositionnements, adhésivité définitive après activation par l'eau), du revêtement mural selon l'invention en comparaison avec
- une toile de verre standard collée au mur par une colle vinylique standard (Ovalit^{®} U)
- une toile de verre EasyGlue^{®},
- une toile de verre EasyFix^{®}.

Ces différentes adhésivités (résistance au pelage) ont été mesurées de la manière suivante :
On colle un échantillon de la toile de verre sur une plaque de plâtre (5 cm x 10 cm) fixée sur un support. Pour les essais d'autoadhésivité (force adhésive initiale, après premier repositionnement et après deuxième repositionnement), on exerce une pression contrôlée de 2500 kg. Pour l'essai après peinture, la pression est manuelle (rouleau de peinture). On découpe, avec un cutter, une bande d'une largeur de 2 cm (longueur 10 cm) dans l'échantillon de toile et on soumet cette bande à un essai de pelage à 90 °C sur un appareil de traction commercialisé par la société Zwick. La vitesse de pelage est de 20 mm/minute. Les résultats du tableau ci-dessous correspondent à la valeur moyenne ± écart-type, calculée sur trois essais.

| | Toile de verre selon l'invention | Toile de verre standard | EasyGlue® | EasyFix® |
|---|---|---|---|---|
| F.A. initiale | 0,47± 0,05 | - | 0 | 0,22±0,05 |
| F.A. premier repositionnement | 0,20± 0,05 | - | 0 | 0,21±0,05 |
| F.A. deuxième repositionnement | 0,21±0,08 | - | 0 | 0,22±0,03 |
| F.A. après activation par l'eau | 5,2±1,5 | 4,3±0,1 | 4,7±0,5 | 4,9±0,1 |
| Durée totale de pose m² estimée pour 35 m | 69 heures | 103 heures | 100 heures | 69 heures |

| | | | | |
|---|---|---|---|---|
| F.A. = force adhésive en Newtons (N) | | | | |

La durée totale de la pose du revêtement mural a été estimée sur la base des différentes étapes mentionnées en introduction.

On peut constater que la toile de verre selon l'invention présente des propriétés d'autoadhésivité satisfaisantes, comparables à celles de la toile de verre à structure ouverte EasyFix^{®}. L'application de deux couches de peinture acrylique permet de coller la toile de verre selon l'invention de façon définitive au mur avec une force d'adhésion légèrement supérieure à celle des produits comparatifs (toile de verre standard, EasyGlue^{®} et EasyFix^{®}).

L'examen du joint de colle de la toile de verre selon l'invention montre que les particules de latex et les pigments de la peinture acrylique n'ont pas pénétré la toile de verre. Celle-ci peut être décollée du mur avec la même facilité que la toile de verre standard et le produit EasyGlue^{®}.

La toile de verre selon l'invention combine ainsi les avantages des produits de l'état de la technique, à savoir une pose rapide et facile, l'absence d'encollage des murs et du revêtement, et un décollage relativement aisé.

## Revendications

1. Revêtement mural autoadhésif comprenant
(A) un textile de verre à structure fermée, constitué de fibres de verres et d'un liant polymère perméable à l'eau, et
(B) un revêtement adhésif comprenant à la fois un adhésif sensible à la pression (PSA) et un adhésif latent activable par l'eau.

2. Revêtement mural selon la revendication 1, **caractérisé par le fait que** le PSA et l'adhésif latent activable par l'eau sont présents dans le revêtement adhésif sous forme de deux couches adhésives distinctes, continues ou discontinues.

3. Revêtement mural selon la revendication 2, **caractérisé par le fait que** le revêtement adhésif (B) comprend
(B1) une première couche adhésive, continue ou discontinue, formée par l'adhésif latent activable par l'eau, ladite première couche étant déposée directement sur le textile de verre, et
(B2) une deuxième couche, continue ou discontinue, formée par un PSA, ladite deuxième couche étant déposée sur la première couche (B1) et/ou à côté de celle-ci.

4. Revêtement mural selon la revendication 3, **caractérisé par le fait que** la première couche adhésive (B1) est une couche continue déposée sur la totalité d'une face du textile de verre (A).

5. Revêtement mural selon la revendication 4, **caractérisé par le fait que** la deuxième couche adhésive (B2) est une couche discontinue constituée d'éléments distincts, déposée sur la première couche adhésive (B1), le rapport des surfaces B2/B1 étant de préférence inférieur à 0,5, en particulier inférieur à 0,3 et idéalement inférieur à 0,1.

6. Revêtement mural selon l'une quelconque des revendications précédentes, **caractérisé par le fait que** le textile de verre est un voile de verre ou une toile de verre, de préférence une toile de verre.

7. Revêtement mural selon l'une quelconque des revendications précédentes, **caractérisé par le fait que** l'adhésif activable par l'eau comprend un ou plusieurs polymères organiques choisis parmi les amidons, les amidons modifiés par hydrolyse ou cuisson, les dextrines et cyclodextrines, les mono-ou oligosaccharides, les alkyléthers de cellulose et hydroxyalkyléther de cellulose, le polyéthylèneglycol, la polyvinylpyrrolidone, les copolymères de vinylpyrrolidone et d'acétate de vinyle, les polyuréthannes hydrophiles, les polyacrylamides, les copolymères d'anhydride maléique et de méthylvinyléther, le poly(acétate de vinyle) (PVAC), le poly(acétate de vinyle) partiellement hydrolysé, le poly(alcool vinylique), et des copolymères d'acétate de vinyle et de maléates ou d'acrylates, de préférence un mélange de poly(acétate de vinyle) et de dextrines.

8. Revêtement mural selon l'une quelconque des revendications 3 à 7, **caractérisé par le fait que** la première couche adhésive présente un poids surfacique à sec compris entre 5 et 150 g/m², de préférence entre 50 et 120 g/m², en particulier entre 80 et 100 g/m².

9. Revêtement mural selon l'une quelconque des revendications précédentes, **caractérisé par le fait que** l'adhésif sensible à la pression est choisi parmi les adhésifs acryliques et les résines élastomères.

10. Revêtement mural selon l'une quelconque des revendications 3 à 9, **caractérisé par le fait que** la deuxième couche adhésive présente un poids surfacique à sec compris entre 1 et 80 g/m², de préférence entre 2 et 50 g/m², en particulier entre 4 et 40 g/m².

11. Revêtement mural selon l'une quelconque des revendications précédentes, **caractérisé par le fait que** le textile de verre (A) présente un grammage compris entre 80 et 450 g/m², de préférence entre 100 et 300 g/m² et en particulier entre 150 et 250 g/m².

12. Revêtement mural selon la revendication 1, **caractérisé par le fait que** le revêtement adhésif (B) a une structure de type monocouche.

13. Revêtement mural selon la revendication 12, **caractérisé par le fait que** l'adhésif latent activable par l'eau est présent dans le revêtement adhésif (B) à raison de 5 à 150 g/m², de préférence de 50 à 120 g/m², en particulier de 80 à 100 g/m², et que le PSA est présent dans le revêtement adhésif (B) à raison de 5 et 80 g/m², de préférence à raison de 10 à 50 g/m², en particulier de 25 à 40 g/m².

14. Procédé de pose d'un revêtement mural, comprenant les étapes successives suivantes :
- application d'une bande du revêtement mural selon l'une quelconque des revendications précédentes sur un support, de préférence une paroi ou un plafond, de manière à ce que le revêtement adhésif soit en contact avec ledit support,
- si nécessaire, repositionnement de ladite bande de revêtement mural,
- application d'eau ou d'une composition aqueuse sur le revêtement mural.

15. Procédé selon la revendication 14, **caractérisé par le fait que** la composition aqueuse est une peinture à base aqueuse.

## Patentansprüche

1. Selbstklebende Wandverkleidung, umfassend:
(A) ein Glastextil mit geschlossener Struktur, das aus Glasfasern und aus einem wasserdurchlässigen Polymerbindemittel besteht, und
(B) eine Klebebeschichtung, die gleichzeitig einen druckempfindlichen Klebstoff (PSA, pressure sensitive adhesive) und einen durch Wasser aktivierbaren latenten Klebstoff enthält.

2. Wandverkleidung nach Anspruch 1, **dadurch gekennzeichnet, dass** der PSA und der durch Wasser aktivierbare latente Klebstoff in der Klebebeschichtung in Form von zwei unterschiedlichen durchgängigen oder unterbrochenen Klebeschichten vorhanden sind.

3. Wandverkleidung nach Anspruch 2, **dadurch gekennzeichnet, dass** die Klebebeschichtung (B) Folgendes umfasst:
(B1) eine erste durchgängige oder unterbrochene Klebeschicht, die von dem durch Wasser aktivierbaren latenten Klebstoff gebildet ist, wobei die erste Schicht direkt auf das Glastextil aufgebracht ist, und
(B2) eine zweite durchgängige oder unterbrochene Schicht, die durch einen PSA gebildet ist,
wobei die zweite Schicht auf die erste Schicht (B1) und/oder neben dieser aufgebracht ist.

4. Wandverkleidung nach Anspruch 3, **dadurch gekennzeichnet, dass** die erste Klebeschicht (B1) eine durchgängige Schicht ist, die auf einer gesamten Seite des Glastextils aufgebracht ist.

5. Wandverkleidung nach Anspruch 4, **dadurch gekennzeichnet, dass** die zweite Klebeschicht (B2) eine unterbrochene Schicht ist, die aus verschiedenen Elementen besteht und auf die erste Klebeschicht (B1) aufgebracht ist, wobei das Verhältnis der Flächen B2:B1 vorzugsweise kleiner als 0,5, insbesondere kleiner als 0,3 und idealerweise kleiner als 0,1 ist.

6. Wandverkleidung nach einem der vorhergehenden Ansprüche, **dadurch gekennzeichnet, dass** das Glastextil ein Glasvlies oder ein Glasgewebe, vorzugsweise ein Glasgewebe ist.

7. Wandverkleidung nach einem der vorhergehenden Ansprüche, **dadurch gekennzeichnet, dass** der durch Wasser aktivierbare Klebstoff ein oder mehrere organische Polymere enthält, die ausgewählt sind aus den Stärken, den durch Hydrolyse oder Kochen modifizierten Stärken, den Dextrinen und Cyclodextrinen, den Mono- oder Oligosacchariden, den Zellulosealkylethern und Zellulosehydroxylalkylethern, Polyethylenglykol, Polyvinylpyrrolidon, den Copolymeren von Polyvinylpyrrolidon und von Vinylacetat, den hydrophilen Polyurethanen, den Polyacrylamiden, den Copolymeren von Maleinanhydrid und von Methylvinylether, Poly(vinylacetat) (PVAC), teilweise hydrolysiertem Poly(vinylacetat), Poly(vinylalkohol) und Copolymeren von Vinylacetat und von Maleaten oder von Acrylaten, vorzugsweise einem Gemisch aus Poly(vinylacetat) und aus Dextrinen.

8. Wandverkleidung nach einem der Ansprüche 3 bis 7, **dadurch gekennzeichnet, dass** die erste Klebeschicht eine flächenbezogene Trockenmasse zwischen 5 und 150 g/m², bevorzugt zwischen 50 und 120 g/m², insbesondere zwischen 80 und 100 g/m² aufweist.

9. Wandverkleidung nach einem der vorhergehenden Ansprüche, **dadurch gekennzeichnet, dass** der druckempfindliche Klebstoff aus den Acrylklebstoffen und den Elastomerharzen ausgewählt ist.

10. Wandverkleidung nach einem der Ansprüche 3 bis 9, **dadurch gekennzeichnet, dass** die zweite Klebeschicht eine flächenbezogene Trockenmasse zwischen 1 und 80 g/m², bevorzugt zwischen 2 und 50 g/m², insbesondere zwischen 4 und 40 g/m² aufweist.

11. Wandverkleidung nach einem der vorhergehenden Ansprüche, **dadurch gekennzeichnet, dass** das Glastextil (A) ein Flächengewicht zwischen 80 und 450 g/m², bevorzugt zwischen 100 und 300 g/m², insbesondere zwischen 150 und 250 g/m² aufweist.

12. Wandverkleidung nach Anspruch 1, **dadurch gekennzeichnet, dass** die Klebebeschichtung (B) eine Struktur des einlagigen Typs hat.

13. Wandverkleidung nach Anspruch 12, **dadurch gekennzeichnet, dass** der durch Wasser aktivierbare Klebstoff in der Klebebeschichtung (B) im Verhältnis von 5 bis 150 g/m², bevorzugt von 50 bis 120 g/m², insbesondere von 80 bis 100 g/m² vorhanden ist und dass der PSA in der Klebebeschichtung (B) im Verhältnis von 5 und 80 g/m², bevorzugt im Verhältnis von 10 bis 50 g/m², insbesondere von 25 bis 40 g/m² vorhanden ist.

14. Verfahren zum Verlegen einer Wandverkleidung, das die folgenden aufeinander folgenden Schritte umfasst:
- Aufbringen eines Streifens der Wandverkleidung nach einem der vorhergehenden Ansprüche auf einen Träger, vorzugsweise eine Wand oder eine Boden, dergestalt, dass die Klebebeschichtung mit dem Träger in Kontakt ist,
- erforderlichenfalls Neupositionieren des Wandverkleidungsstreifens,
- Aufbringen von Wasser oder einer wässrigen Zusammensetzung auf die Wandverkleidung.

15. Verfahren nach Anspruch 14, **dadurch gekennzeichnet, dass** die wässrige Zusammensetzung eine Anstrichfarbe auf Wasserbasis ist.

## Claims

1. A self-adhesive wall covering comprising:
(A) a glass textile with a closed structure, consisting of glass fibers and of a water-permeable polymer binder, and
(B) an adhesive coating comprising both a pressure-sensitive adhesive (PSA) and a water-activable latent adhesive.

2. The wall covering as claimed in claim 1, **characterized in that** the PSA and the water-activable latent adhesive are present in the adhesive coating in the form of two separate, continuous or discontinuous, adhesive layers.

3. The wall covering as claimed in claim 2, **characterized in that** the adhesive coating (B) comprises:
(B1) a first, continuous or discontinuous, adhesive layer formed by the water-activable latent adhesive, said first layer being deposited directly onto the glass textile, and
(B2) a second, continuous or discontinuous, layer formed by a PSA, said second layer being deposited onto the first layer (B1) and/or next to the latter.

4. The wall covering as claimed in claim 3, **characterized in that** the first adhesive layer (B1) is a continuous layer deposited on the whole of one face of the glass textile (A).

5. The wall covering as claimed in claim 4, **characterized in that** the second adhesive layer (B2) is a discontinuous layer consisting of separate elements, deposited on the first adhesive layer (B1), the ratio of the surface areas B2/B1 preferably being less than 0.5, in particular less than 0.3 and ideally less than 0.1.

6. The wall covering as claimed in any one of the preceding claims, **characterized in that** the glass textile is a glass veil or a glass cloth, preferably a glass cloth.

7. The wall covering as claimed in any one of the preceding claims, **characterized in that** the water-activable adhesive comprises one or more organic polymers selected from starches, starches modified by hydrolysis or cooking, dextrins and cyclodextrins, monosaccharides or oligosaccharides, cellulose alkyl ethers and cellulose hydroxyalkyl ethers, polyethylene glycol, polyvinylpyrrolidone, vinylpyrrolidone/vinyl acetate copolymers, hydrophilic polyurethanes, polyacrylamides, maleic anhydride/methyl vinyl ether copolymers, polyvinyl acetate (PVAC), partially hydrolyzed polyvinyl acetate, polyvinyl alcohol, and copolymers of vinyl acetate and maleates or acrylates, preferably a mixture of polyvinyl acetate and dextrins.

8. The wall covering as claimed in any one of claims 3 to 7, **characterized in that** the first adhesive layer has a dry surface density of between 5 and 150 g/m², preferably of between 50 and 120 g/m², in particular of between 80 and 100 g/m².

9. The wall covering as claimed in any one of the preceding claims, **characterized in that** the pressure-sensitive adhesive is selected from acrylic adhesives and elastomer resins.

10. The wall covering as claimed in any one of claims 3 to 9, **characterized in that** the second adhesive layer has a dry surface density of between 1 and 80 g/m², preferably of between 2 and 50 g/m², in particular of between 4 and 40 g/m².

11. The wall covering as claimed in any one of the preceding claims, **characterized in that** the glass textile (A) has a grammage of between 80 and 450 g/m², preferably of between 100 and 300 g/m² and in particular of between 150 and 250 g/m².

12. The wall covering as claimed in claim 1, **characterized in that** the adhesive coating (B) has a monolayer-type structure.

13. The wall covering as claimed in claim 12, **characterized in that** the water-activable latent adhesive is present in the adhesive coating (B) in an amount of from 5 to 150 g/m², preferably from 50 to 120 g/m², in particular from 80 to 100 g/m², and that the PSA is present in the adhesive coating (B) in an amount of from 5 to 80 g/m², preferably in an amount of from 10 to 50 g/m², in particular from 25 to 40 g/m².

14. A method for hanging a wall covering, comprising the following successive steps:
- applying a strip of the wall covering as claimed in any one of the preceding claims to a support, preferably a wall or a ceiling, so that the adhesive coating is in contact with said support,
- if necessary, repositioning said strip of wall covering,
- applying water or an aqueous composition to the wall covering.

15. The method as claimed in claim 14, **characterized in that** the aqueous composition is an aqueous-based paint.
